# EUROPÄISCHE PATENTANMELDUNG

(11) **EP 1 070 951 A2**
(43) Veröffentlichungstag der Anmeldung: **24.01.2001**
(21) Anmeldenummer: 00115220.6
(22) Anmeldetag: 13.07.2000
(51) Int. Cl.: G01M 19/00

(54) **Prüfung von Kühl- und/oder Gefriergeräten**

(30) Priorität: 22.07.1999 DE 29912824 U
(71) Anmelder: LIEBHERR-HAUSGERÄTE GMBH, 88416 Ochsenhausen (DE)
(72) Erfinder: Winter, Helmut, 88484 Gutenzell (DE); Roll, Peter, 88416 Ochsenhausen (DE); Matz, Helmut, 88444 Ummendorf (DE)
(74) Vertreter: Gossel, Hans K., Dipl.-Ing.

(57) **Zusammenfassung**

Die vorliegende Erfindung betrifft die Prüfung von Kühl- und/oder Gefriergeräten. Um die Kühl- und/oder Gefriergerate einem Langzeittest unterziehen zu können, ist erfindungsgemäß vorgesehen, daß die Geräte auf eine Prüfstrecke einer Anlage zum Befördern der Geräte geführt werden, die als Speicherstrecke ausgebildet ist.

## Beschreibung

Die vorliegende Erfindung bezieht sich auf die Prüfung von Kühl- und/oder Gefriergeräten.

Kühl- und Gefriergeräte müssen zur Prüfung ihrer Funktionsfähigkeit vor Verlassen des Werks auf ihre Funktionsfähigkeit hin überprüft werden. Dazu werden stichprobenartig einige Geräte aus dem Fertigungsband einer Serie herausgenommen und auf Abstellbänder gestellt, wobei in die herausgenommenen Geräte Temperaturüberwachungsvorrichtungen zum Aufzeichnen des Kühlverhaltens über einen vorgegebenen Zeitraum eingelegt werden. Diese Temperaturüberwachungsgeräte werden auch als "Logger" bezeichnet. Die Überprüfung mit einem Logger kann einige Minuten bis zu etwa einer Stunde dauern, wobei das Kühlverhalten des Gerätes über den gesamten Prüfzeitraum aufgezeichnet wird. Nach Ablauf der Prüfzeit wird der Logger aus dem Gerät genommen und ausgelesen, um die Funktionsfähigkeit bzw. das Kühlverhalten des Gerätes beurteilen zu können.

Die anderen nicht durch einen Logger überprüften Geräte werden durch eine Handprüfung überprüft, wobei bei diesen Geräten mit einer Hand lediglich überprüft werden kann, ob das Gerät grundsätzlich funktioniert, also geeignet kühlt. Dabei können jedoch keine genaueren Aussagen über das Kühlverhalten im einzelnen getroffen werden.

Eine Überprüfung sämtlicher Kühlschränke durch Logger ist nicht möglich, da bei der kontinuierlichen Fertigung die einzelnen Geräte mit einer vorgegebenen Geschwindigkeit bewegt werden. Soll eine Überprüfung während etwa einer Stunde durch Einlegen eines Loggers erfolgen, so müßte eine sehr lange Prüfstrecke vorgesehen werden. Dies ist in der Praxis mit begrenzten Abmessungen z.B. in einer Fertigungshalle nicht realisierbar.

Es ist die Aufgabe der Erfindung eines Anlage vorzuschlagen, mit welcher ein Großteil bzw. alle Kühl- oder Gefriergeräte einem Langzeittest unterzogen werden können.

Diese Aufgabe wird gelöst durch eine Anlage mit den Merkmalen des Anspruchs 1. Vorteilhafte Ausführungsformen ergeben sich aus den Unteransprüchen.

Erfindungsgemäß werden bei einer Anlage zum befördern von Kühl- und/oder Gefriergeräten die Geräte auf einer Prüfstrecke geführt, wobei bevorzugt Logger am Anfang der Prüfstrecke in jedes Kühlgerät eingelegt werden. Die Prüfstrecke ist dabei als Speicherstrecke ausgebildet, so daß auf verhältnismäßig kleinem Raum alle Geräte zur Überprüfung zwischengespeichert werden können. Durch eine geeignete Wegführung kann die Prüfstrecke auf kleinem Raum so ausgebildet sein, daß ein ausreichender Weg zur Verfügung steht, um die für die Loggerprüfung zur Aufzeichnung benötigte Zeit im kontinuierlichen Fertigungs- und Förderprozeß zur Verfügung zu stellen. Die Ausbildung der Prüfstrecke als Speicherstrecke ermöglicht es also, daß eine Vielzahl von Kühl- und/oder Gefriergeräten auf relativ kleinem Raum kontinuierlich befördert werden können, so daß jedes Gerät einen für eine Langzeitprüfung ausreichenden Zeitraum bei Durchlaufen der Speicherstrecke in dieser verbleibt, damit bei einem kontinuierlichen Herstellungsverfahren für jedes Gerät eine ausreichende Zeit zur Verfügung steht, um die Funktionalität z.B. mittels eines Loggers zu überprüfen.

Vorteilhaft ist die Speicherstrecke so ausgebildet, daß alle Kühl- und/oder Gefriergeräte durchgeführt werden können, wobei es natürlich auch möglich ist im wesentlichen alle Geräte bzw. einen bestimmten Anteil davon hindurchzuführen, so daß einzelne Geräte auch aus dem Fertigungs- und Prüfprozeß herausgenommen werden können.

Die Speicherstrecke ist vorteilhaft so ausgebildet, daß mindestens zwei in etwa parallel nebeneinander verlaufende Prüfstreckenabschnitte vorgesehen sind. Dabei ist es aus Platzgründen vorteilhaft, die nebeneinander verlaufenden Prüfstreckenabschnitte mit einem möglichst geringen Zwischenabstand voneinander vorzusehen, so daß der zur Verfügung stehende Platz bestmöglichst ausgenützt wird.

Nach einer bevorzugten Ausführungsform der Erfindung weist die Prüfstrecke eine Mäanderform auf, so daß die zu prüfenden Geräte abwechselnd in zwei entgegengesetzte Richtungen transportiert werden, wobei an den Endpunkten der jeweiligen Prüfstreckenabschnitte eine Richtungsumkehr des Förderweges, z.B. in Form einer Kurve vorgesehen ist.

Es ist weiterhin vorteilhaft die Speicherstrecke so auszubilden, daß die zu überprüfenden Geräte auf mindestens zwei getrennte Prüfstreckenabschnitte aufgeteilt werden, wobei die Kühl- und/oder Gefriergeräte auf den einzelnen Prüfstreckenabschnitten dann auch mit einer niedrigeren Geschwindigkeit transportiert werden können. Die Aufteilung der Geräte auf mindestens zwei Prüfstreckenabschnitte, welche jeweils wie oben beschrieben ausgebildet sein können, also z.B. Geradenabschnitte oder eine Mäanderform oder ähnliches aufweisen, bewirkt, daß auf relativ kleinem Raum eine große Speicherwirkung erhalten werden kann. Im kontinuierlichen Verfahren steht also für jedes einzelne Gerät eine ausreichende Zeit für die Langzeitüberprüfung der Kühlleistung zur Verfügung.

Die Erfindung wird nachfolgend anhand von bevorzugten Ausführungsbeispielen beschrieben. Es zeigen:
- Fig. 1: einen Logger zum Aufzeichnen des Kühlverhaltens;
- Fig. 2: das Kühlverhalten eines Gerätes während eines Prüfzeitraumes;
- Fig. 3: eine erfindungsgemäße Speicherstrecke gemäß einer ersten Ausführungsform; und
- Fig. 4: eine erfindungsgemäße Speicherstrecke gemäß einer zweiten Ausführungsform.

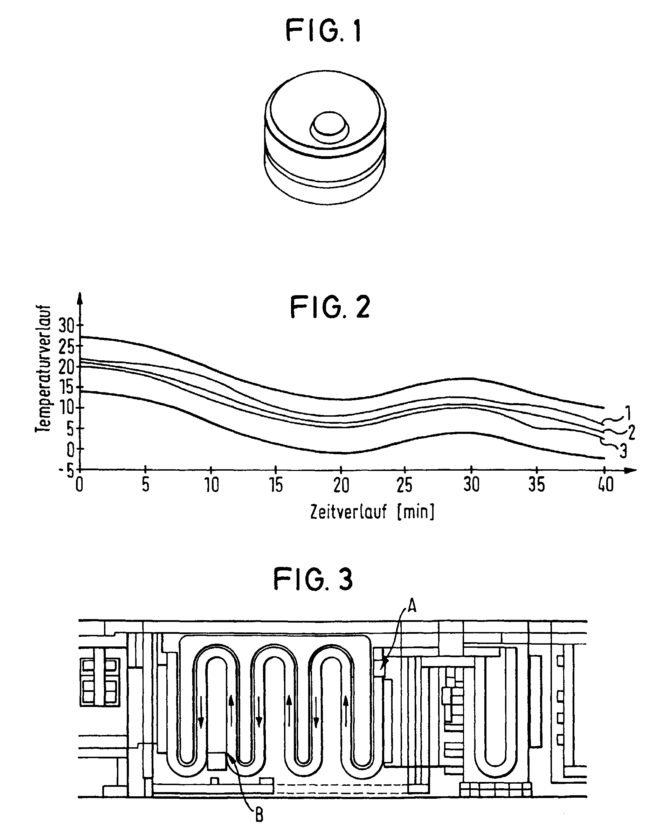

Fig. 1 zeigt einen Logger zur Überprüfung des Abkühlverhaltens eines Kühl- und/oder Gefriergerätes, mit welchem der Temperaturverlauf mittels eines geeigneten Sensors gemessen und im Logger gespeichert werden kann. Der Logger kann z.B. eine Meßantenne aufweisen und von außen abgefragt werden, so daß die durch einen Temperaturfühler des Loggers während eines längeren Zeitraumes gemessene Temperatur in Abhängigkeit von der Zeit dargestellt werden kann. Es ist möglich einen oder auch mehrere Logger in ein zu überprüfendes Gerät, wie z.B. in das Kühlfach und das Gefrierfach zum Überprüfen zu legen.

Fig. 2 zeigt den Temperaturverlauf bei mehreren überprüften Geräten. Die beispielhaft in der Mittellinie durch dünne Kurven dargestellten Temperaturverläufe 1, 2 und 3 zeigen also, daß zu Beginn der Prüfung die Temperatur bei etwa der Umgebungstemperatur von 21°C liegt. Nach ca. 20 Min. wurde das Innere der zu prüfenden Geräte auf ca. 6°C abgekühlt. Aus dieser Veränderung der Temperatur über einen vorgegebenen Zeitraum kann auf die Kühlleistung bzw. das richtige Funktionieren des zu überprüfenden Gerätes rückgeschlossen werden, In dem gezeigten Ausführungsbeispiel wurde nach Erreichen einer bestimmten Temperatur nach ca. 20 Minuten die Kühlung des Gerätes automatisch ausgeschaltet, worauf eine geringe Erwärmung auf etwa 10°C nach der Gesamtprüfzeit von ca. 30 Minuten folgte. Zu diesem Zeitpunkt wird die Kühlung wieder eingeschaltet, so daß - wie aus Fig. 2 ersichtlich - die Temperatur wieder verringert wurde. Die oberhalb und unterhalb der gezeichneten Temperaturverläufe 1, 2 und 3 dick eingezeichneten Linien stellen Toleranzgrenzen für einen Test dar, welche nicht über- bzw. unterschritten werden dürfen. Vorteilhaft wird die Aufzeichnung so durchgeführt, daß die einzelnen aufgezeichneten Kurven nach Auswertung wieder einem bestimmten Gerät zugeordnet werden können, so daß gezielt ein nicht funktionsfähiges bzw. nur schlecht funktionierendes Gerät ausgesondert werden kann.

Fig. 3 zeigt eine Ausbildung einer Speicherstrecke gemäß einer ersten Ausführungsform der Erfindung. Nach Verlassen der Fertigungsstrecke werden am Punkt A in die zu überprüfenden Geräte Logger eingelegt, bevor die Geräte in die Speicher- bzw. Pufferstrecke einfahren. Die Geräte bewegen sich von dem Punkt A weg entlang der mäanderförmigen Prüfstrecke in der durch die Pfeile vorgegebenen Richtung. Beim Durchfahren der Prüfstrecke wird ein ausreichender Weg zurückgelegt, welcher sicherstellt, daß im Anschluß an den kontinuierlichen Fertigungsprozeß eine ausreichende Zeit von z.B. 40 bis 60 Minuten zur Verfügung steht, um jedes einzelne Kühl- bzw. Gefriergerät mittels eines eingelegten Loggers zu testen. Auf relativ kleinem Raum steht somit eine Prüfstrecke mit ausreichender Länge zur Verfügung, welche die einzelnen Geräte über einen bestimmten Zeitraum speichern kann, so daß die zur Langzeitprüfung benötigte Zeit erhalten werden kann. Nach Durchlaufen der Speicherstrecke werden an dem Punkt B die Logger aus den überprüften Geräten entnommen und ausgelesen.

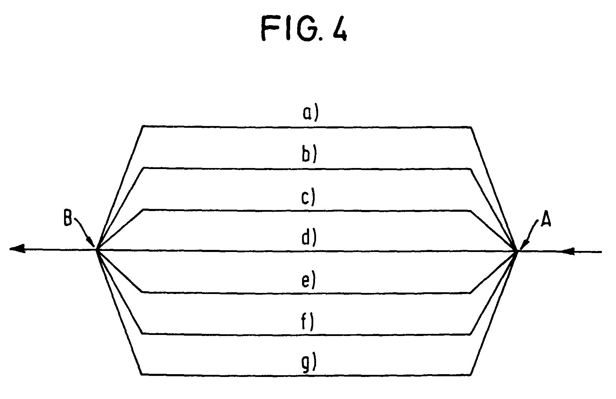

Fig. 4 zeigt eine zweite Ausführungsform der erfindungsgemäßen Speicherstrecke. Wie in Fig. 3 wird an dem Punkt A ein Logger in jedes von rechts in die Speicherstrecke eintretende Gerät eingelegt. Die einzelnen Geräte werden auf die sieben beispielhaft gezeigten Prüfteilstrecken a) bis g) aufgeteilt. So wird z.B. das erste zu überprüfende Gerät auf die Prüfteilstrecke a) gegeben, das zweite auf die Prüfteilstrecke b) usw. Nachdem das 7. Gerät auf die Prüfteilstrecke g) gegeben wurde, wird das 8. Gerät wieder auf die Prüfteilstrecke a) gegeben. Zur Verteilung der einzelnen zu überprüfenden Geräte auf die Prüfteilstrecken kann natürlich jedes andere geeignete Verfahren verwendet werden. Da in dem Ausführungsbeispiel gemäß Fig. 4 sieben Prüfteilstrecken a) bis g) vorgesehen sind, kann die Fördergeschwindigkeit der zu prüfenden Geräten auf einer einzelnen Prüfteilstrecke nur ein siebtel der ursprünglichen Fördergeschwindigkeit betragen, ohne einen Rückstau zu verursachen. Es können somit alle Geräte im kontinuierlichen Verfahren überprüft werden, wobei aufgrund der Verringerung der Fördergeschwindigkeit in den einzelnen Prüfteilstrecken auf kleinem Raum eine Speicherwirkung für Kühl- oder Gefriergeräte erhalten werden kann. Es kann somit eine Vielzahl der zu überprüfenden Geräte durch die Anordnung aus mehreren Prüfteilstrecken parallel zueinander geführt werden, so daß jedes einzelne Gerät eine ausreichende Zeit in der Prüfstrecke verbleibt, um einen Temperatur-Langzeittest durchzuführen. Die einzelnen Prüfteilstrecken a) bis g) werden an dem Punkt B wieder zusammengeführt, an welchem die in die Geräte eingelegten Logger wieder aus diesen entnommen und ausgewertet werden. Von diesem Punkt B an können die Geräte wieder mit der ursprünglichen Geschwindigkeit weiterbefördert werden.

## Patentansprüche

1. Anlage zum Befördern von Kühl- und/oder Gefriergeräten auf einer Prüfstrecke, wobei die Prüfstrecke als Speicherstrecke ausgebildet ist.

2. Anlage nach Anspruch 1, wobei die Anlage so ausgebildet ist, daß alle Kühl- und/oder Gefriergeräte nach Verlassen einer Fertigungseinheit durch die Prüfstrecke geführt werden können.

3. Anlage nach Anspruch 1 oder 2, wobei die Prüfstrecke aus mindestens zwei in etwa parallel nebeneinander verlaufenden Prüfstreckenabschnitten ausgebildet ist.

4. Anlage nach einem der vorhergehenden Ansprüche, wobei die Prüfstrecke in etwa mäanderförmig ausgebildet ist.

5. Anlage nach einem der vorhergehenden Ansprüche, wobei die Prüfstrecke in mindestens zwei Prüfstreckenteilabschnitte aufgeteilt wird.
